# EUROPEAN PATENT SPECIFICATION

(11) **EP 2 039 074 B1**
(45) Date of publication and mention of the grant of the patent: **10.08.2016**
(21) Application number: 06777353.1
(22) Date of filing: 16.06.2006
(51) Int. Cl.: H04L 29/06, H04W 36/00

(54) **HANDOVER CONTROL IN A MOBILE NETWORK**
HANDOVER-STEUERUNG IN EINEM MOBILNETZ
COMMANDE DE TRANSFERT DANS UN RÉSEAU MOBILE

(43) Date of publication of application: 25.03.2009
(73) Proprietor: Telefonaktiebolaget LM Ericsson (publ), 164 83 Stockholm (SE)
(72) Inventor: HALLENSTÅL, Magnus, S-187 50 Täby (SE); VIKBERG, Jari, Tapio, S-153 38 Järna (SE); NYLANDER, Tomas, S-139 34 Värmdö (SE)
(74) Representative: Boco IP Oy Ab
(86) International application number: PCT/EP2006/063299
(87) International publication number: WO 2007/144027

(56) References cited:
- EP-A- 1 182 900
- WO-A-01/31963
- WO-A-2006/040673
- 3GPP SA WG2: "Voice Call Continuity between CS and IMS Study (3GPP TR 23.806 version 7.0.0 Release 7)" 3GPP TR 23.806 V7.0.0, XX, XX, December 2005 (2005-12), pages 1-153, XP002385067

## Description

### Field of the Invention

The present invention relates to a handover control in a mobile network. In particular, the invention relates to a method and apparatus for handing over an ongoing real-time call from a current cell to a target cell belonging to the same or different radio access networks, where the ongoing call was established using the services of an IP Multimedia Subsystem and is transported in the current cell over a circuit switched (CS) bearer.

### Background to the Invention

IP Multimedia (IPMM) services provide a dynamic combination of voice, video, messaging, data, etc, within the same session. By growing the numbers of basic applications and the media which it is possible to combine, the number of services offered to the end users will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). IMS provides key features to enrich the end-user person-to-person communication experience through the integration and interaction of services. IMS allows new rich person-to-person (client-to-client) as well as person-to-content (client-to-server) communications over an IP-based network. The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Whilst SIP was created as a user-to-user protocol, IMS allows operators and service providers to control user access to services and to charge users accordingly. Other protocols are used for media transmission and control, such as Real-time Transport Protocol and Real-time Transport Control Protocol (RTP/RTCP), Message Session Relay Protocol (MSRP), and Hyper Text Transfer Protocol (HTTP). IMS requires an access network which would typically be a 3GPP Packet Switched (PS) network, but which might be some other access network such a fixed broadband or WiFi network.

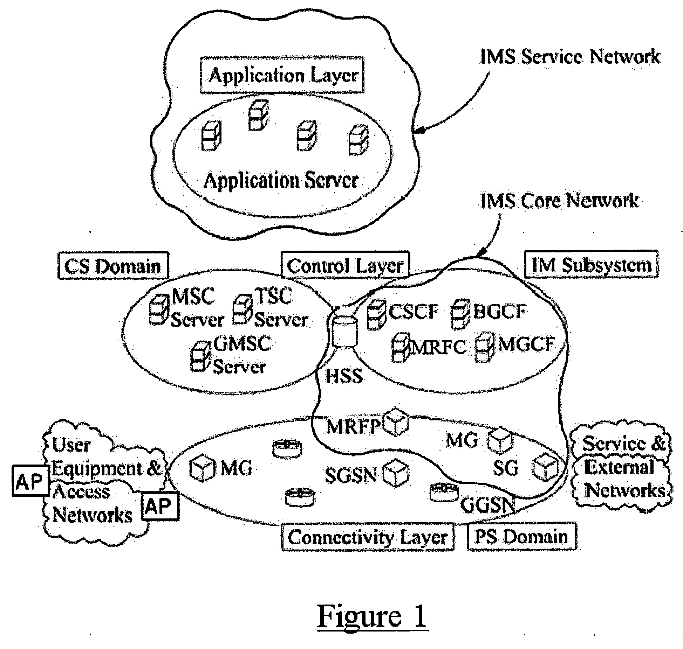

Figure 1 illustrates schematically how the IMS fits into the mobile network architecture in the case of a 3GPP PS access network. Call Session Control Functions (CSCFs) operate as SIP proxies with the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A fundamental requirement for real-time service provision is the seamless handover of services for subscribers roaming across cell boundaries of the radio access network (RAN) or subscribers roaming across RAN or radio access technology (RAT) boundaries (e.g. moving between 2G, 3G and/or LTE networks). Traditional circuit switched (CS) based call services have been designed to meet this requirement. In the case of 2G and currently implemented 3G networks, PS real time handover with low latency is not provided for although service continuity is achieved at the terminal side by ordering a session to be moved from one cell to another, i.e. there is no prepare phase to shorten latency when moving cell. Real time PS handover is standardized in 3GPP for 3G networks, but the feature has not yet been deployed. It is expected that when High-Speed Downlink Packet Access (HSDPA) is deployed, or shortly thereafter, the mechanisms needed for fast PS handover will be also be deployed. For 2G networks, fast and efficient PS handover procedures in the packet switched (PS) domain within the 2G network (and between 2G and 3G networks) have only recently been standardized in 3GPP TS 43.129 and in the initial implementation stage, roll-out of this feature across 3G networks will inevitably be patchy. Support for PS handover in 2G networks is never likely to be comprehensive (if implemented at all), yet handover of PS calls would be desirable as 2G networks will continue to provide a fallback network for 3G subscribers in the case of limited 3G network coverage. It can also be expected that the next generation radio and core network which are currently being specified under the name LTE (Long Term Evolution) and SAE (System Architecture Evolution) in 3GPP will also have limited coverage, and that these networks will also require fallback to 3G and 2G networks.

It is expected that in the future a major user of PS services will be Voice-over-IP (VoIP) applications. VoIP calls will be particularly sensitive to even relatively minor service interruptions caused by inter-cell handovers. As long as a terminal engaged in a VoIP call can perform PS handover to another cell (the "target cell"), the interruption can be kept short enough to avoid any noticeable drop in perceived quality. However, if either the current cell or the target cell do not support PS handover, a noticeable interruption is likely to occur as packets will be lost during the transition period. Consequently, until all RAN cells support PS handover, the provision of IMS services such as voice and video calls utilising the PS domain is likely to result in users receiving a reduced quality of service when crossing cell boundaries.

International patent application number PCT/EP04/05333 describes a process for allowing the IMS to automatically establish a VoIP call over a CS network when a user requests the VoIP call using signalling sent over a PS network. In this way, the IMS ensures that the appropriate Quality of Service (QoS) is applied to the call. In addition, the VoIP CS call will benefit from the seamless handovers afforded by the CS domain, if and when the user moves into a neighbouring cell. The procedure involves the establishment of a CS leg between the IMS and the MSC in order to link the CS access network leg to the IMS. This is achieved using an inter MSC handover procedure.

The 3GPP standard 3GPP TR 23.806 describes mechanisms for voice call continuity between CS and IMS.

European Patent application EP1182900 provides intersystem handoffs between circuit and packet switched systems. A Media Gateway translates bearer traffic between formats used in each system and cooperates with a Media Gateway Control Function and an associated Call State Control Function to emulate the behaviour of a circuit switched system

### Summary of the Invention

PCT/EP04/05333 does not consider handover of a call, back from the CS domain to the PS domain in the event that this is possible, e.g. if the user subsequently roams into a cell with PS handover capability.

According to a first aspect of the present invention there is provided a method of handing over an ongoing real-time call involving a mobile station, from a circuit switched bearer in a current cell of a radio access network to a packet switched bearer in a target cell of the same or a different radio access network, the ongoing call having been established using the services of an IP Multimedia Subsystem, the method comprising:
sending a handover instruction from the radio access network responsible for the current cell or from the mobile station to the IP Multimedia Subsystem, the instruction identifying the target cell;
in response to receipt of said instruction at the IP Multimedia Subsystem, establishing a packet switched bearer in the target cell; and
transferring the ongoing call from said circuit switched bearer to said packet switched bearer.

The invention is applicable in particular to the case where the ongoing real-time call was established initially over a packet switched bearer and was subsequently transferred to a circuit switched bearer, e.g. as a result of a mobile station moving into an area which does not support PS services or PS handover. When PS resources become available, the invention provides a mechanism for transferring the call back to the PS domain.

Preferably, the radio access network responsible for said current cell or said mobile station, identifies a target cell based upon a knowledge of the packet switched handover capabilities of the current cell and of neighbouring or overlapping cells. In the case where selection is performed by the radio access network, the network entity responsible for cell selection maintains a database containing the packet switched handover capabilities of the cells for which it is responsible and of neighbouring and overlapping cells. This entity may be a Base Station Controller (BSC) in the case of a GSM/EDGE radio access network (GERAN) or a Radio Network Controller (RNC) in the case of a UMTS terrestrial radio access network (UTRAN). Where it is the mobile station which performs cell selection, the mobile station may receive notifications from cells containing respective packet switched capabilities, and in particular packet switched handover capabilities of these cells. These notifications may be in the form of System Information messages.

According to an alternative approach, the IP Multimedia Subsystem is provided with a knowledge of the packet switched handover capabilities of cells and radio networks/technologies. Based upon this knowledge, the IP Multimedia subsystem determines, upon receipt of a handover instruction, whether to maintain the ongoing call in the circuit switched domain or perform a handover to the packet switched domain.

In an embodiment of the invention, the radio access network responsible for said current cell identifies a target cell, and signals the identity directly (i.e. without the involvement of the mobile station) to the IP Multimedia Subsystem together with a handover instruction. This may be sent via a Mobile Switching Centre (MSC) in the case where the current cell is a cell of a 2G network. MAP signalling may be used for this purpose. Once the packet switched bearer has been established in the target cell, the IP Multimedia Subsystem causes circuit switched signalling to be sent to the radio access network responsible for the current cell in order to switch the call to the new packet switched bearer and cause the circuit switched bearer to be released.

In an alternative embodiment of the invention, the mobile station signals said handover instruction to the IP Multimedia Subsystem over a packet switched signalling bearer in the current cell. SIP signalling is used for this purpose. Once the packet switched bearer has been established in the target cell, the IP Multimedia Subsystem instructs the mobile station using SIP signalling to switch the call to the new packet switched bearer, and causes the circuit switched bearer to be released.

Preferably, the target cell identity or set of target cell identities is received within the IP Multimedia Subsystem by a functional entity which may be a standalone entity or an entity integrated into an existing node, for example a Proxy Call Session Control Function.

In an embodiment of the invention, the packet switched bearer is established over a GPRS network comprising a GPRS Gateway Support Node (GGSN). The GGSN is in turn attached to a Policy & Charging Resource Function (PCRF). The packet switched bearer in the target cell may be established by signalling sent from an entity within the IP Multimedia Subsystem that receives said handover instruction, to the Policy & Charging Resource Function. Alternatively, the packet switched bearer may be established by signalling sent from the mobile station to the Policy & Charging Resource Function in the case where an existing packet switched signalling bearer is available to the mobile station in the current cell. The IP Multimedia Subsystem may instruct the mobile station to perform this task following receipt by the IP Multimedia Subsystem of the handover instruction.

Where the current cell is a cell of a 3G radio access network, e.g. a UTRAN, a Radio Network Controller is responsible for the current cell. Where the current cell is a cell of a 2G radio access network, then it is a Base Station Controller that is responsible for the current cell. A typical use case of the present invention involves performing a handover of a real-time call from a cell of a 2G radio access network to a cell of a 3G radio access network or a 3GPP LTE radio access network, where the latter supports packet switched handover but the former does not.

The invention is applicable in particular, though not exclusively, to Voice-over-IP real time calls.

Embodiments of the present invention allow for the mobile terminal and/or the IP Multimedia Subsystem to reject a request for a handover based upon local policy.

According to a second aspect of the present invention there is provided apparatus for use in a radio access network of a mobile communications system, the apparatus comprising:
means for storing the packet switched handover capabilities of cells under the control of the apparatus and of other neighbouring/overlapping cells;
means for identifying one or more target cells for the handover of an ongoing real-time call, established using the services of an IP Multimedia Subsystem, from a circuit switched bearer in a current cell, based upon the stored handover properties of cells; and
means for instructing an IP Multimedia Subsystem to perform a handover of the call to a packet switched bearer in the target cell.

According to a third aspect of the present invention there is provided a mobile station arranged to communicate via one or more radio access networks of a mobile communications system, the mobile station comprising:
means for establishing a real-time call over a circuit switched bearer of a current cell using the services of an IP Multimedia Subsystem;
means for identifying a target cell within which a packet switched bearer can be established and to which the ongoing call can be handed over; and
means configured to send a handover instruction to an IP Multimedia Subsystem, the instruction identifying the target cell.

According to a fourth aspect of the present invention there is provided an IP Multimedia Subsystem based apparatus comprising:
means for receiving a handover instruction identifying a target cell associated with a handover of a real-time call, established using the services of an IP Multimedia Subsystem, from a circuit switched bearer in a current cell to a packet switched bearer in a target cell; and
means for sending a handover instruction to the radio access network responsible for the current cell.

Typically, said apparatus is a network server.

### Brief Description of the Drawings

Figure 1 illustrates schematically the integration of an IP Multimedia Subsystem into a 3G mobile communications system;
Figure 2 illustrates the relationship and interfaces between an IP Multimedia Subsystem, radio access network, and circuit switched and packet switched core networks;
Figure 3 is a signalling diagram illustrating signalling associated with a circuit switched to packet switched handover, when PS-signalling is available in the current cell;
Figure 4 is a signalling diagram illustrating signalling associated with a circuit switched to packet switched handover, when no PS resources are available in the current cell;
Figure 5 illustrates schematically a first implementation of a Packet Circuit Anchor Point (PCAP) functional entity with an IP Multimedia Subsystem;
Figure 6 illustrates schematically a second implementation of a Packet Circuit Anchor Point functional entity with an IP Multimedia Subsystem; and
Figure 7 illustrates how to implement the invention using current 3GPP VCC architecture.

### Detailed Description of Certain Embodiments

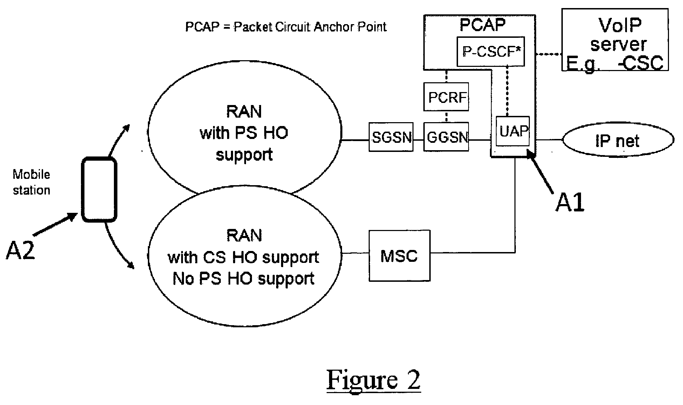

Figure 2 illustrates a pair of radio access networks (RANs) which provide overlapping coverage for mobile stations (MSs). In the case of a particular MS, one of the RANs is assumed to provide a packet switched (PS) handover capability in the location where the MS resides, whilst the other does not. Both RANs provide a circuit switched (CS) handover capability in this location. In a typical scenario assumed here, the former RAN is a 3G/UMTS terrestrial radio access network (UTRAN), whilst the latter is a 2G RAN (i.e. GERAN).

Figure 2 illustrates the PS core network for the 3G network. The same PS core network may be present for the 2G network. PS services are facilitated by a Serving GPRS Support Node (SGSN) and a Gateway GPRS Support Node (GGSN). [In 3GPP SAE/LTE the current standard view is that the PS service will be facilitated by a so-called a-GW (access GateWay).] For the 2G and 3G case, the GGSN is coupled to the IMS core network, and in particular to a Proxy Call Session Control Function (P-CSCF) node. In order to access the IMS, the MS must first register with the IMS using the Session Initiation Protocol (SIP) REGISTER method. To establish and control an IMS service, the MS exchanges further SIP messages with the S-CSCF. SIP messages are transported via a physical GPRS transport channel. Within the IMS, the P-CSCF is responsible for requesting and releasing PS network resources at the GGSN. It does this via a Policy & Charging Resource Function (PCRF).

It is assumed that a user of a MS established a VoIP call over a PS bearer. When the MS roamed into a cell of the 2G RAN, as that RAN does not support PS handover, the VoIP call would have been handed over to a CS bearer of the 2G RAN. The MS is now assumed to again be within a cell of the 3G RAN (i.e. after moving back to the 3G RAN coverage) which does provide a PS handover capability. It is thus desirable to handover the ongoing VoIP call from a CS bearer of the 2G network to a PS bearer of the 3G network.

The MS will be continuously measuring the quality of the in-use radio link. The MS will be told on which neighbouring cell(s) it should measure signal strength. The MS will periodically report the results of the measurements to the Base Station Controller (BSC) within the current cell of the Base Station Subsystem (BSS, the 2G RAN). Based upon the received reports, the BSC may decide to instigate a handover of the VoIP call to a neighbouring cell (i.e. a target cell) in which case it will initiate the handover preparation phase towards the target cell. The handover preparation phase may also involve the MSC and another BSC or RNC depending on which radio access controller is controlling the target cell. Once the handover preparation phase is successfully performed, the BSC commands the MS to perform the handover towards the target cell and provides the MS with the physical information needed to access the target cell. This is normal handover behaviour. However, according to this proposal, in addition to the conventional capability data, the BSC maintains information regarding the PS handover capabilities for all neighbouring cells handled by the same and other RANs. The BSC uses the cell PS handover capability knowledge when making a handover decision and selecting a target cell or cells, in addition to signal strength observed by the MS and by the base stations, the type of session (i.e. voice/text) and the location and movement of the MS, coverage and capabilities of the neighbouring cells, etc.

In order to implement CS to PS handover of the ongoing VoIP call (currently using CS as bearer on the user plane), a new element is configured within the IP Multimedia Subsystem (IMS), referred to as a Packet Circuit Anchor Point (PCAP). This is illustrated in Figure 2. The PCAP could be an enhanced P-CSCF with user plane functionality, or a P-CSCF that controls a User plan Anchor Point (UAP). The UAP entity within the PCAP shown in the Figure is responsible for switching over from a CS leg (a CS connection to the MS) to a PS leg (the connection to the MS over the PS domain). The PCAP is notified of the target cell identity and the need for a CS to PS handover, and initiates the appropriate actions. The PCAP may receive this notification either directly from the MS or via the Mobile Switching Centre (MSC). Essentially, the PCAP node acts as an anchor MSC requesting resources in a target RAN.

### RAN INITIATED HANDOVER

Considering firstly the case where the RAN determines that handover from a CS to PS bearer is possible and desirable, and the MS supports PS VoIP, a message is sent from the BSS or RNC to the MSC indicating that handover is required from CS to PS. This can be done, for example, using an enhanced BSSMAP HANDOVER REQUIRED (in the case of BSC) or an enhanced RANAP RELOCATION REQUIRED (in the case of RNC or Iu-mode BSC) message. The message will contain an explicit (new) indication about the required handover from CS to PS. Also included in the message sent to the MSC is the identity of the "best" target cell or a list of possible target cells. A cell may be identified by, for example, a Cell Global Identity (CGI) in the case of a GSM network or a Location area and a 3G cell identity in the case of a 3G network, where the 3G cell identity consists of an RNC identity and a cell identifier. In this particular embodiment, the RAN determines whether or not a handover to PS should be performed based on data configured in the RAN by the operator, e.g. concerning the PS handover capabilities of the cells in the area.

Once the MSC receives the HANDOVER/RELOCATION REQUIRED message, it will send MAP-Prep-Sub-Handover_required over Mobile Application Part (MAP) to the PCAP, according to normal MSC to MSC handover procedures. Included in the MAP-Prcp-Sub-Handover_required message is the new indication that the handover is to be from CS to PS (as indicated by the HANDOVER/RELOCATION REQUIRED message from the RAN).

An alternative approach is also possible which does not require updates in the BSS or CS UTRAN, nor updates of the MSCs. Again, a mobile station measures the cells notified to it by the BSC or RNC. Based on the measurement results of the mobile station and the base station, the BSC/RNC uses its normal procedure to determine if a handover to a cell not controlled by the BSC/RNC should be carried out. If so, normal procedure applies until MAP-Prep-Sub-Handover_required over Mobile Application Part (MAP) is received by the PCAP. The PCAP has configured data that will be used to check whether or not the handover should continue in CS or go back to PS. This data defines PS handover capabilities on one or more levels, for example:
- on a cell level, i.e. each cell is listed;
- on a Routing Area level, i.e. if the PS handover is enabled or disabled for a specific routing area;
- on the RAN/RAT level, i.e. if the target cell is a GSM cell, then it could be known that the GSM RAT (i.e. GERAN) does not support PS handover and the PCAP should instead trigger normal CS handover; and
- on a mobile network level (the received cell identity contains also a network identifier, PLMN identifier), i.e. the whole mobile network identified by the received cell identity does or does not support PS handover.

Whilst perhaps less flexible than the method described above, this alternative approach has no impact on UTRAN or BSS functionality, and only the data in these networks needs to be set correctly.

A disadvantage of this alternative approach is that, if a target cell identified to the IMS is not capable of performing PS handover, the IMS has no possibility to select a suitable alternative target cell. Of course, if the RAN or MS can provide a set of potential target cells, the likelihood that the IMS can select a suitable cell is increased. Another possible way to improve flexibility is to allow the IMS to reject a target cell, and to request a reselection by the RAN.

Once the PCAP has handled the MAP-Prep-Sub-Handover_required message according to either of the above approaches, it will ask for an IP bearer supporting real time VoIP from the Policy & Charging Resource Function (PCRF). It will also indicate that this is for a CS to PS handover case, and include the target cell identity and the other properties related to the requested PS bearer. The PCRF will then ask the Gateway GPRS Serving/Support Node (GGSN) for a secondary packet data protocol (PDP) context to be prepared in the target RAN's cell with the requested properties. Thus, the process of controlling the allocation of the needed PS resources utilises a PS handover procedure triggered from the IMS domain, via the GGSN towards the SGSN and RAN that controls the selected target cell, to establish a PS bearer, i.e. the PS handover preparation phase is performed from the IMS system and GGSN node as opposed to from another SGSN node as is the case with existing procedures. The PCAP acts effectively as an anchor MSC towards the CS domain. This approach causes the target RAN to allocate PS resources to the MS on the basis of the information contained in the handover-required message and information known in the PCAP about the current call or session.

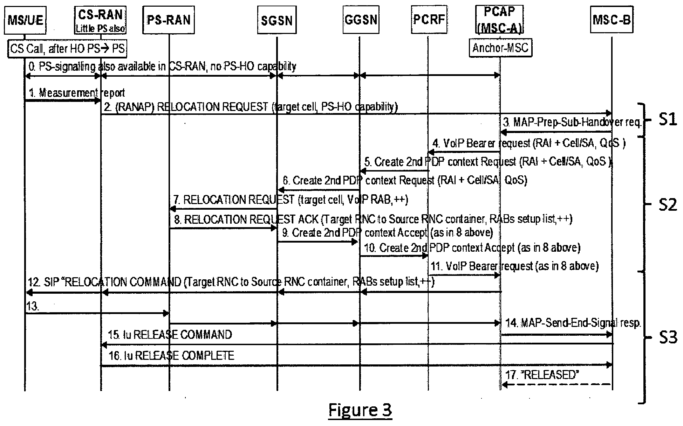

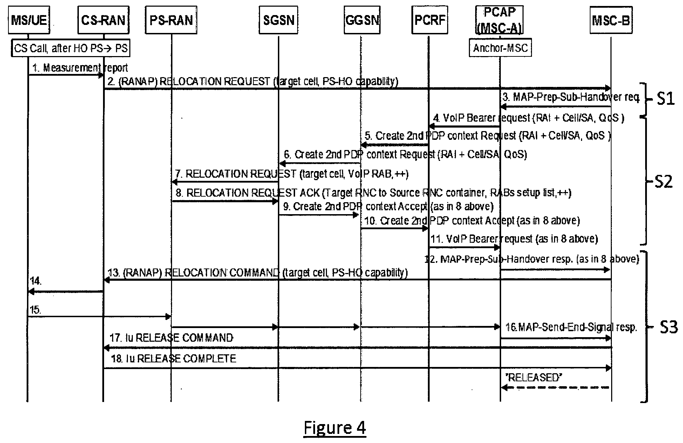

If resources are successfully allocated in the target RAN, the PCAP will receive a positive acknowledgement with information about the allocated resources. When this acknowledgement is received, the PCAP will send a MAP-Prep-Sub-Handover response back to the MSC if there is no PS support in the current cell (example flow shown in Figure 4 and discussed below). Alternatively, if PS-signalling is available in the current cell, the PCAP signals to the MS using the PS-signalling connection and sends the SIP RELOCATION COMMAND message (example flow shown in Figure 3 and discussed below).

### Example flow with UMTS RANs when PS-signalling available in the current cell

This example is illustrated in Figure 3 whereby the mobile in question is capable of simultaneous CS and PS traffic. This example assumes the initial handover from PS to CS has already taken place, i.e. for the case where PS handover is not supported. Thus, the PCAP is already designated as the Anchor Mobile Switching Centre (MSC). The subsequent flow describes:
a) Handover back from CS to PS is triggered (Step 2)
b) Network initiated PDP context creation without UE (Steps 4-11)
c) Signalling back to UE via PS-signalling (Step 12)

Considering step 12 of Figure 3 in more detail, the SIP signalling message (shown in Figure 3 as "SIP RELOCATION COMMAND" message) contains all required information about the resources related to the target cell and the created PS bearer. When the MS receives this information, it just has to know that it relates to a Handover from CS to PS and how to use the received information.

Following completion of step 2, the RNC sees the Iu-RELEASE COMMAND in step 15. A possible problem with this approach is that all statistics related to handover in the RNC are lost as the RNC has no way of knowing if the call was just released or if a successful CS to PS Handover was performed. This problem could be solved by adding a new Release cause code value in the messages sent in steps 14 and 15 indicating that a successful CS to PS handover has been performed.

### Example flow with UMTS RANs when no PS resources are available in the current cell

This example is illustrated in Figure 4 whereby, as above, the mobile in question is capable of simultaneous CS and PS traffic, but there are no PS resources in the current cell. As before, this example assumes the initial handover from PS to CS has already taken place and that the PCAP is designated as the Anchor Mobile Switching Centre (MSC). The subsequent flow describes:
a) Handover back from CS to PS is triggered (Step 2)
c) Network initiated PDP context creation without UE (Steps 4-11)
d) Signalling back to UE via CS-signalling (Steps 12-14)

Considering step 12 of Figure 4 in more detail, the main difference vis-à-vis existing procedures is that normally this MAP message contains, for example, a GSM RR HANDOVER COMMAND message (for CS HO to a GSM cell) that is created by the target BSC and passed all the way to the MS which then uses the received information to access the target cell. In the present approach, information is effectively passed transparently from the "anchor-MSC" to the MS, but instead of a GSM RR HANDOVER COMMAND, a PS HANDOVER COMMAND message is included which is then passed via the CS domain all the way to the MS. The PS HANDOVER COMMAND message contains all required information about the resources related to the target cell AND the created PS bearer. When the MS receives this information, it just has to know that it relates to a Handover from CS to PS and how to use the received information.

### MS INITIATED HANDOVER

Considering secondly the case where it is the MS which determines that handover from a CS to PS bearer is possible and desirable, a message is sent directly to the PCAP by the MS indicating that handover is required from CS to PS. This embodiment assumes that PS support exists in the current cell for control signalling, i.e. that a primary PDP context has been established and is used for control signalling between the MS and the PCAP. The MS continuously measures signal strength from neighbouring cells and also receives information broadcast from the RANs regarding cell/network support for PS handover. Thus, the MS is able to select an appropriate cell/network with PS handover capabilities. Once identified, the MS will send a SIP message to the PCAP, requesting handover from CS to PS and identifying the "best" target cell or a list of possible target cells. As above, a cell may be identified by, for example, a Cell Global Identity (CGI) in the case of a GSM network, or a Location area and a 3G cell identity in the case of a 3G network.

Upon receipt of the SIP message from the MS to the PCAP containing for example the CGI, the PCAP activates the secondary PDP context and allocates resources in the target cell. The PCAP then sends information back to the MS about the allocated resources. The MS then switches to the PS bearer in the new cell. The PCAP then releases the CS leg with the MSC.

In an alternative embodiment, the MS may initiate the secondary PDP context rather than the network. In this case, the PCAP will signal to the MS for it to establish the secondary PDP context and related resources in the current cell. When the MS creates/activates the secondary PDP context it indicates that this PDP context is created for a soon to be done PS handover. This means that the current cell does not really need to support the created PS bearer, but the needed PDP context state information is created in the MS and in the relevant network nodes in the PS domain. Once the PDP context is successfully established by the MS, it notifies the PCAP about this and the PCAP initiates the needed PS Handover to move the newly created PDP context to the target cell.

In still another alternative embodiment, the MS may initiate the secondary PDP context in the target cell while still being engaged in communication in the source cell. In this case, the PCAP will signal to the MS for it to establish the secondary PDP context and related resources in the target cell. In this case, the MS is capable of communicating simultaneously in two different cells, the current cell and the target cell. When the MS has created the secondary PDP context in the target cell, it indicates this to PCAP and then the handover from the CS bearer to the PS bearer can be performed. To minimise the break time, both the MS and the PCAP can send the traffic on both the CS and the PS bearers. When the MS has successfully moved to the PS bearer, it can communicate this to the PCAP using SIP signalling and then the PCAP can stop sending the traffic on the CS bearer and can also release the CS bearer.

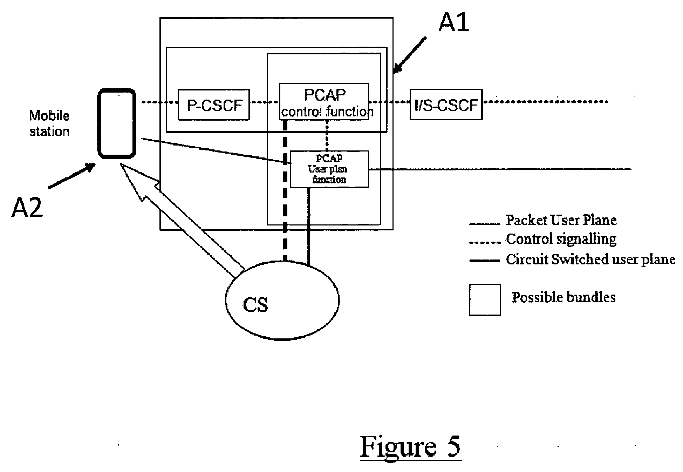

Figure 5 illustrates schematically a first implementation of the PCAP entity within the IMS. According to this implementation, the PCAP is enabled with CS call control signalling and MAP signalling functionality and it anchors the user plane and converts CS to PS when necessary in the user plane. The functions can be bundled according to the rectangles shown.

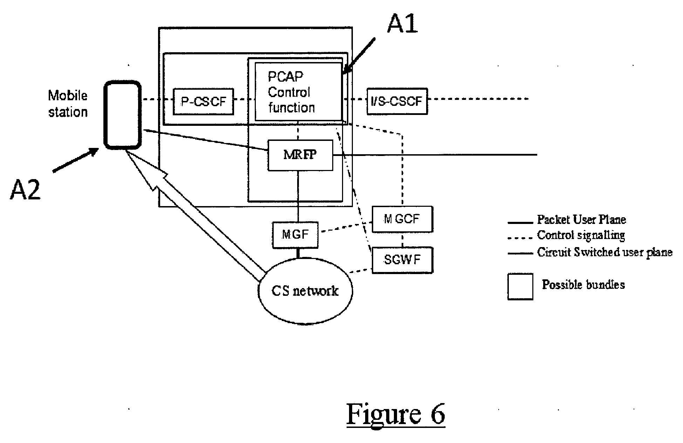

Figure 6 illustrates an alternative implementation of the PCAP entity which makes use of existing IMS components such as the Media Gateway Control Function (MGCF), Media Gateway Function (MGF), and the Media Resource Function Processor (MRFP). Here the PCAP uses normal SIP signalling to set-up a call leg towards the PS network. The MGCF translates this SIP signalling to ISUP or other CS call control signalling protocol. The Signalling Gateway Function (SGWF) translates CS based signalling bearers to PS signalling bearers. The PCAP entity uses the MRFP to switch between different PS user plane paths. For a PS path to MGF, the MGF translates it to CS user plane. PCAP will also signal MAP, but still use IP as the bearer, and the SGWF will translate this to a CS signalling bearer.

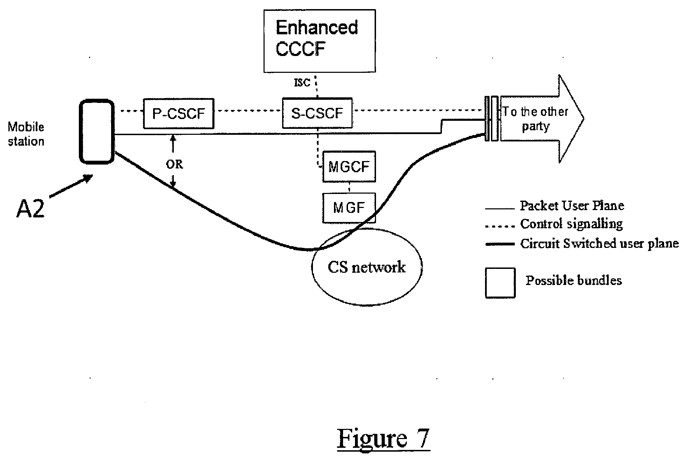

An alternative approach according to Figure 7 is to implement the present invention making use of a Voice Call Continuity (VCC) application within the IMS. VCC is specified in 3GPP TR 23.806, 23.206, and 24.206. In this implementation, either the RAN or the MS sends the VCC part the handover instruction. The VCC part then contacts PCRF which creates the required second PDP context, and then instructs the MS to move over from the CS to the PS bearer.

It will be appreciated by persons skilled in the art that various modifications may be made to the above described embodiments without departing from the scope of the present invention. For example, whilst the above discussion has been concerned with a 2G access network, the invention is equally applicable to a 3G access network and to overlapping 2G and 3G networks. In the case of a 3G network, the UTRAN is responsible for notifying the MS (or UE in 3G parlance) or the PCAP of a handover decision and the identity of the target cell. The invention is also applicable to future generation networks such as 3GPP LTE/SAE.

## Claims

1. A method of handing over an ongoing real-time call involving a mobile station, from a circuit switched bearer in a current cell of a radio access network to a packet switched bearer in a target cell of the same or a different radio access network, the ongoing call having been established using the services of an IP Multimedia Subsystem, the method comprising:
sending (S1) a handover instruction from the radio access network responsible for the current cell or from the mobile station to the IP Multimedia Subsystem, the instruction identifying the target cell;
in response to receipt of said instruction at the IP Multimedia Subsystem, establishing (S2) a packet switched bearer in the target cell; and
transferring (S3) the ongoing call from said circuit switched bearer to said packet switched bearer.

2. A method according to claim 1, wherein an anchor Mobile Switching Centre function for the ongoing call is present in the IP Multimedia Subsystem.

3. A method according to claim 1 or 2, wherein the radio access network responsible for said current cell or said mobile station, identifies a target cell based upon a knowledge of the packet switched handover capabilities of the current cell and of neighbouring or overlapping cells.

4. A method according to claim 3, wherein a network entity responsible for cell selection maintains a database containing the packet switched handover capabilities of the cells for which it is responsible and of neighbouring and overlapping cells.

5. A method according to claim 4, wherein said network entity is a Base Station Controller in the case of a GSM radio access network or a Radio Network Controller in the case of a UMTS terrestrial radio access network.

6. A method according to claim 1 or 2, wherein the mobile station performs cell selection, the mobile station receiving notifications from cells containing respective packet switched handover capabilities.

7. A method according to claim 6, wherein said notifications are System Information messages.

8. A method according to claim 1 or 2, the IP Multimedia Subsystem being provided with a knowledge of the packet switched handover capabilities of cells and radio networks/technologies and, based upon this knowledge, determining upon receipt of a handover instruction, whether to maintain the ongoing call in the circuit switched domain or perform a handover to the packet switched domain.

9. A method according to claim 1 or 2, the radio access network responsible for said current cell identifying a target cell, and signaling the identity directly to the IP Multimedia Subsystem together with a handover instruction.

10. A method according to claim 1 or 2, the mobile station signaling said handover instruction to the IP Multimedia Subsystem over a packet switched signalling bearer in the current cell.

11. A method according to claim 10, said handover instruction being sent using the Session Initiation Protocol.

12. A method according to any one of the preceding claims, and comprising establishing said packet switched bearer over a GPRS network comprising a GPRS Gateway Support Node attached to a Policy & Charging Resource Function, said packet switched bearer in the target cell being established by signalling sent from an entity within the IP Multimedia Subsystem that receives said handover instruction, to the Policy & Charging Resource Function.

13. A method according to any one of claims 1 to 11 and comprising establishing said packet switched bearer using signalling sent from the mobile station to a Policy & Charging Resource Function in the case where an existing packet switched signalling bearer is available to the mobile station in the current cell.

14. A method according to any one of the preceding claims, wherein said current cell is a cell of a 2G radio access network and said target cell is a cell of a 3G radio access network or a 3GPP LTE radio access network.

15. A method according to any one of the preceding claims, wherein said ongoing call is a Voice-over-IP call.

16. Apparatus (A1) for use in a radio access network of a mobile communications system, the apparatus comprising:
means for storing the packet switched handover capabilities of cells under the control of the apparatus and of other neighbouring/overlapping cells;
means for identifying one or more target cells for the handover of an ongoing real-time call established using the services of an IP Multimedia Subsystem from a circuit switched bearer in a current cell, based upon the stored handover properties of cells; and
means for instructing the IP Multimedia Subsystem to perform a handover of the call to a packet switched bearer in the target cell.

17. A mobile station (A2) arranged to communicate via one or more radio access networks of a mobile communications system, the mobile station comprising:
means for establishing a real-time call using the services of an IP Multimedia Subsystem over a circuit switched bearer of a current cell;
means for identifying a target cell within which a packet switched bearer can be established and to which the ongoing call can be handed over; and
means configured to send a handover instruction to the IP Multimedia Subsystem, the instruction identifying the target cell.

18. An IP Multimedia Subsystem based apparatus comprising:
means for receiving a handover instruction identifying a target cell associated with a handover of a real-time call established using the services of the IP Multimedia Subsystem from a circuit switched bearer in a current cell to a packet switched bearer in a target cell; and
means for sending a handover instruction to the radio access network responsible for the current cell.

## Patentansprüche

1. Verfahren zum Handover eines laufenden Echtzeit-Anrufs, das eine Mobilstation umfasst, von einem leistungsvermittelten Träger in einer aktuellen Zelle eines Funkzugangsnetzes zu einem paketvermittelten Träger in einer Zielzelle desselben oder eines anderen Funkzugangsnetzes, wobei der laufende Anruf unter Verwendung der Dienste eines IP Multimedia Subsystems aufgebaut wurde, das Verfahren umfassend:
Senden (S1) einer Handover-Anweisung vom für die aktuelle Zelle zuständigen Funkzugangsnetz oder von der Mobilstation zum IP Multimedia Subsystem, wobei die Anweisung die Zielzelle identifiziert;
als Reaktion auf den Empfang der Anweisung durch das IP Multimedia Subsystem, Aufbauen (S2) eines paketvermittelten Trägers in der Zielzelle; und
Übertragen (S3) des laufenden Anrufs vom leistungsvermittelten Träger zum paketvermittelten Träger.

2. Verfahren nach Anspruch 1, wobei eine Mobilvermittlungsstellen-Ankerfunktion für den laufenden Anruf im IP Multimedia Subsystem vorhanden ist.

3. Verfahren nach Anspruch 1 oder 2, wobei das für die aktuelle Zelle zuständige Funkzugangsnetz oder die Mobilstation eine Zielzelle beruhend auf der Kenntnis der paketvermittelten Handover-Fähigkeiten der aktuellen Zelle und benachbarter oder überlappender Zellen identifiziert.

4. Verfahren nach Anspruch 3, wobei eine für die Zellauswahl zuständige Netzwerkeinheit eine Datenbank aufrechterhält, die die paketvermittelten Handover-Fähigkeiten der Zellen enthält, für die sie zuständig ist, und von benachbarten und überlappenden Zellen.

5. Verfahren nach Anspruch 4, wobei die Netzwerkeinheit im Falle eines GSM-Funkzugangsnetzes eine Basisstationssteuerung oder im Falle eines terrestrischen UMTS-Funkzugangsnetzes eine Funknetzsteuerung ist.

6. Verfahren nach Anspruch 1 oder 2, wobei die Mobilstation eine Zellauswahl durchführt und Benachrichtigungen von Zellen empfängt, die entsprechende paketvermittelte Handover-Fähigkeiten enthalten.

7. Verfahren nach Anspruch 6, wobei die Benachrichtigungen Systeminformationsnachrichten sind.

8. Verfahren nach Anspruch 1 oder 2, wobei das IP Multimedia Subsystem mit der Kenntnis der paketvermittelten Handover-Fähigkeiten von Zellen und Funknetzen/Funktechnologien bereitgestellt wird und wobei beruhend auf dieser Kenntnis beim Empfang einer Handover-Anweisung bestimmt wird, ob der laufende Anruf in der leistungsvermittelten Domäne gehalten werden soll, oder ob ein Handover zur paketvermittelten Domäne durchgeführt werden soll.

9. Verfahren nach Anspruch 1 oder 2, wobei das für die aktuelle Zelle zuständige Funkzugangsnetz eine Zielzelle identifiziert und die Identität direkt dem IP Multimedia Subsystem zusammen mit einer Handover-Anweisung signalisiert.

10. Verfahren nach Anspruch 1 oder 2, wobei die Mobilstation die Handover-Anweisung über einen paketvermittelten Signalträger in der aktuellen Zelle an das IP Multimedia Subsystem signalisiert.

11. Verfahren nach Anspruch 10, wobei die Handover-Anweisung unter Verwendung des Session Initiation Protocols gesendet wird.

12. Verfahren nach einem der vorstehenden Ansprüche und umfassend das Aufbauen des paketvermittelten Trägers über ein GPRS-Netz, das einen GPRS Gateway Support Node in Verbindung mit einer Policy & Charging Resource Function umfasst, wobei der paketvermittelte Träger in der Zielzelle durch eine von einer Einheit innerhalb des IP Multimedia Subsystems, das die Handover-Anweisung empfängt, an die Policy & Charging Resource Function gesendete Signalgebung aufgebaut wird.

13. Verfahren nach einem der Ansprüche 1 bis 11 und umfassend das Aufbauen des paketvermittelten Trägers unter Verwendung einer von der Mobilstation an eine Policy & Charging Resource Function gesendeten Signalgebung in dem Fall, in dem ein bestehender paketvermittelter Signalträger für die Mobilstation in der aktuellen Zelle verfügbar ist.

14. Verfahren nach einem der vorstehenden Ansprüche, wobei die aktuelle Zelle eine Zelle eines 2G-Funkzugangsnetzes ist und die Zielzelle eine Zelle eines 3G-Funkzugangsnetzes oder eines 3GPP-LTE-Funkzugangsnetzes ist.

15. Verfahren nach einem der vorstehenden Ansprüche, wobei der laufende Anruf ein Voice-over-IP-Anruf ist.

16. Vorrichtung (A1) zur Verwendung in einem Funkzugangsnetz eines Mobilkommunikationssystems, die Vorrichtung umfassend:
Mittel zum Speichern der paketvermittelten Handover-Fähigkeiten von Zellen unter der Kontrolle der Vorrichtung und von anderen benachbarten/überlappenden Zellen;
Mittel zum Identifizieren einer oder mehrerer Zielzellen für das Handover eines laufenden Echtzeit-Anrufs, der unter Verwendung der Dienste eines IP Multimedia Subsystems aufgebaut wurde, von einem leistungsvermittelten Träger in einer aktuellen Zelle, beruhend auf den gespeicherten Handover-Fähigkeiten von Zellen; und
Mittel zum Anweisen des IP Multimedia Subsystems zum Durchführen eines Handovers des Anrufs an einen paketvermittelten Träger in der Zielzelle.

17. Mobilstation (A2), dazu angeordnet, über ein oder mehrere Funkzugangsnetze eines Mobilkommunikationssystems zu kommunizieren, die Mobilstation umfassend:
Mittel zum Aufbauen eines Echtzeit-Anrufs unter Verwendung der Dienste eines IP Multimedia Subsystems über einen leistungsvermittelten Träger einer aktuellen Zelle;
Mittel zum Identifizieren einer Zielzelle, innerhalb der ein paketvermittelter Träger aufgebaut werden kann und zu der der laufende Anruf übergeben werden kann; und
Mittel, die konfiguriert sind, eine Handover-Anweisung an das IP Multimedia Subsystem zu senden, wobei die Anweisung die Zielzelle identifiziert.

18. IP Multimedia Subsystem-basierte Vorrichtung, umfassend:
Mittel zum Empfangen einer Handover-Anweisung, die eine Zielzelle in Verbindung mit einem Handover eines Echtzeit-Anrufs identifiziert, der unter Verwendung der Dienste des IP Multimedia Subsystems aufgebaut wurde, von einem leistungsvermittelten Träger in einer aktuellen Zelle zu einem paketvermittelten Träger in einer Zielzelle; und
Mittel zum Senden einer Handover-Anweisung an das für die aktuelle Zelle zuständige Funkzugangsnetz.

## Revendications

1. Procédé permettant de transférer un appel en temps réel en cours impliquant une station mobile, depuis un support à commutation de circuits dans une cellule actuelle d'un réseau d'accès radio vers un support à commutation de paquets dans une cellule cible du même réseau d'accès radio ou d'un réseau d'accès radio différent, l'appel en cours ayant été établi à l'aide des services d'un sous-système multimédia IP, le procédé comprenant :
l'envoi (S1) d'une instruction de transfert du réseau d'accès radio responsable de la cellule actuelle ou de la station mobile au sous-système multimédia IP, l'instruction identifiant la cellule cible ;
en réponse à la réception de ladite instruction au niveau du sous-système multimédia IP, l'établissement (S2) d'un support à commutation de paquets dans la cellule cible ; et
le transfert (S3) de l'appel en cours depuis ledit support à commutation de circuits vers ledit support à commutation de paquets.

2. Procédé selon la revendication 1, dans lequel une fonction d'ancrage de centre de commutation mobile pour l'appel en cours est présente dans le sous-système multimédia IP.

3. Procédé selon la revendication 1 ou 2, dans lequel le réseau d'accès radio responsable de ladite cellule actuelle ou de ladite station mobile identifie une cellule cible sur la base d'une connaissance des capacités de transfert à commutation de paquets de la cellule actuelle et des cellules avoisinantes ou chevauchantes.

4. Procédé selon la revendication 3, dans lequel une entité de réseau responsable de la sélection de cellule conserve une base de données contenant les capacités de transfert à commutation de paquets des cellules dont elle est responsable et des cellules avoisinantes ou chevauchantes.

5. Procédé selon la revendication 4, dans lequel ladite entité de réseau est un contrôleur de station de base dans le cas d'un réseau d'accès radio GSM ou un contrôleur de réseau radio dans le cas d'un réseau d'accès radio terrestre UMTS.

6. Procédé selon la revendication 1 ou 2, dans lequel la station mobile effectue une sélection de cellule, la station mobile recevant des notifications de cellules contenant des capacités de transfert à commutation de paquets respectives.

7. Procédé selon la revendication 6, dans lequel lesdites notifications sont des messages d'informations système.

8. Procédé selon la revendication 1 ou 2, dans lequel le sous-système multimédia IP est doté d'une connaissance des capacités de transfert à commutation de paquets de cellules et de réseaux/technologies radio et, sur la base de cette connaissance, détermine à la réception d'une instruction de transfert, si l'appel en cours doit être maintenu dans le domaine à commutation de circuits ou s'il doit être transféré vers le domaine à commutation de paquets.

9. Procédé selon la revendication 1 ou 2, dans lequel le réseau d'accès radio responsable de ladite cellule actuelle identifie une cellule cible et signale l'identité directement au sous-système multimédia IP avec une instruction de transfert.

10. Procédé selon la revendication 1 ou 2, dans lequel la station mobile signale ladite instruction de transfert au sous-système multimédia IP sur un support de signalisation à commutation de paquets dans la cellule actuelle.

11. Procédé selon la revendication 10, dans lequel ladite instruction de transfert est envoyée à l'aide du protocole d'initiation de session.

12. Procédé selon l'une quelconque des revendications précédentes, et comprenant l'établissement dudit support à commutation de paquets sur un réseau GPRS comprenant un noeud de support de transit GPRS lié à une fonction PCRF (« Policy and Charging Resource Function »), ledit support à commutation de paquets dans la cellule cible étant établi par une signalisation envoyée depuis une entité dans le sous-système multimédia IP qui reçoit ladite instruction de transfert, à la fonction PCRF.

13. Procédé selon l'une quelconque des revendications 1 à 11, et comprenant l'établissement dudit support à commutation de paquets à l'aide de la signalisation envoyée depuis la station mobile à une fonction PCRF, dans le cas où un support de signalisation à commutation de paquets existant est disponible pour la station mobile dans la cellule actuelle.

14. Procédé selon l'une quelconque des revendications précédentes, dans lequel ladite cellule actuelle est une cellule d'un réseau d'accès radio 2G et ladite cellule cible est une cellule d'un réseau d'accès radio 3G ou d'un réseau d'accès radio 3GPP LTE.

15. Procédé selon l'une quelconque des revendications précédentes, dans lequel ledit appel en cours est un appel voix-sur-IP.

16. Appareil (A1 à utiliser dans un réseau d'accès radio d'un système de communication mobile, l'appareil comprenant :
un moyen permettant de stocker les capacités de transfert à commutation de paquets de cellules commandé par l'appareil et d'autres cellules avoisinantes/chevauchantes ;
un moyen permettant d'identifier une ou plusieurs cellules cibles pour le transfert d'un appel en temps réel en cours établi à l'aide des services d'un sous-système multimédia IP à partir d'un support à commutation de circuits dans une cellule actuelle, sur la base des propriétés de transfert stockées de cellules ; et
un moyen permettant d'ordonner au sous-système multimédia IP d'effectuer un transfert de l'appel vers un support à commutation de paquets dans la cellule cible.

17. Station mobile (A2) agencée pour communiquer via un ou plusieurs réseaux d'accès radio d'un système de communication mobile, la station mobile comprenant :
un moyen permettant d'établir un appel en temps réel à l'aide des services d'un sous-système multimédia IP sur un support à commutation de circuits d'une cellule actuelle ;
un moyen permettant d'identifier une cellule cible dans laquelle un support à commutation de paquets peut être établi et vers laquelle l'appel en cours peut être transféré ; et
un moyen configuré pour envoyer une instruction de transfert au sous-système multimédia IP, l'instruction identifiant la cellule cible.

18. Appareil basé sur un sous-système multimédia IP, comprenant :
un moyen permettant de recevoir une instruction de transfert identifiant une cellule cible associée à un transfert d'un appel en temps réel établi à l'aide des services du sous-système multimédia IP depuis un support à commutation de circuits dans une cellule actuelle vers un support à commutation de paquets dans une cellule cible ; et
un moyen permettant d'envoyer une instruction de transfert au réseau d'accès radio responsable de la cellule actuelle.
